# EUROPEAN PATENT SPECIFICATION

(11) **EP 4 347 376 B1**
(45) Date of publication and mention of the grant of the patent: **24.06.2026**
(21) Application number: 22730432.6
(22) Date of filing: 23.05.2022
(51) Int. Cl.: B63B 77/00, B63B 7/02, B63C 3/00, B63B 75/00, E02B 17/00

(54) **A FLOATING FABRICATION ARRANGEMENT AND A METHOD OF BUILDING FLOATING STRUCTURES**
SCHWIMMENDE HERSTELLUNGSANORDNUNG UND VERFAHREN ZUM HERSTELLEN VON SCHWIMMENDEN STUKTUREN
ARRANGEMENT DE FABRICATION FLOTTANT ET MÉTHODE DE FABRICATION DE STUCTURES FLOTTANTES

(30) Priority: 26.05.2021 NO 20210670
(43) Date of publication of application: 10.04.2024
(73) Proprietor: MOBILE FABRICATION SITE AND PORT AS, 0107 Oslo (NO)
(72) Inventor: GRIMSRUD, Geir, 1555 Son (NO)
(74) Representative: Bryn Aarflot AS
(86) International application number: PCT/EP2022/063882
(87) International publication number: WO 2022/248400

(56) References cited:
- EP-A1- 3 170 730
- WO-A1-2020/240068
- GB-A- 2 578 294
- JP-A- H0 840 360
- KR-B1- 102 192 116
- US-A1- 2020 164 950

## Description

### Technical Field

The present invention relates to a floating fabrication arrangement for building of floating structures, such as wind turbine foundations, as well as a method of building such structures.

### Background Art

It is convenient to build floating structures either on shore or close to a quay. If the structure is built on shore, there must be a either a crane present that can lift the structure into the water or a slip to launch the structure into the water after the structure has been built.

Alternatively, the structure can be built while it is floating. This can be done in a dry dock or on top of an already built floating sub-structure. If a dry dock is used, this has to have a sufficient size to accommodate the finished structure. For large structures there are a limited number of such docks available.

These techniques generally require a sufficient water depth next to the quay to allow for the launch of the structure without the structure hitting the seabed. The only exception is if the structure is built in a dry dock, as it is then possible to tow the dock to a place with sufficient water depth.

EP3170730 shows a vessel that can be ballasted so that one end thereof is below the water surface. This is, however, done when the vessel is mid-ocean. It is in no way connected to a quay, or any other land side for that matter. When the vessel is at the quay side it is not possible to lower that end of the vessel to launch a structure. The launch end of the vessel extends into and above the quay, and a lowering would only cause the vessel to hit the top of the quay.

Moreover, while the components of the floating structure are temporarily stored on the deck of the vessel, the building takes place on an arm shaped structure extending outside the deck aft of the vessel.

KR102192116B1 shows several floating elements interconnected to a barge-like support structure. This barge-like structure can receive a load to be transported to a site of installation. When the site of installation has been reached, the barge-like structure is de-ballasted to bring one end thereof below the water surface and the load slides into the sea. The barge-like structure lacks any facilities to enable assembly of large components on the deck thereof.

The above constraints put great limits on where a floating structure can be built. The limitations increase with the size and draught of the floating structure.

It is therefore often necessary to tow the floating structure from a place suitable for building the structure to the place where it is to be deployed. The distance can be considerable. This does not only take time and is costly. It is also risky, as the tow will have to be done during good weather conditions. Last, but not least, it is not very environmentally friendly to tow the structure over large distances. Especially, when building wind turbines, which are supposed to reduce the carbon emission footprint, it is desirable to make the production as environmentally friendly as possible.

The obvious solution to this would be to increase the water depth either by excavating the seabed close to an existing quay, or by building a quay, or extending an existing quay, into deeper waters. This is, however, not desirable both from an environmental perspective and due to the high costs.

Prior art references include WO 2016/138088, JP S5583678 and SE 443962. None of these meets the requirements of the present invention.

There is consequently a great need for a new solution that makes it possible to build large floating structures at an existing facility close to where the structures are to be deployed, even though the water depth close to the existing facility is too shallow for the floating structure to float.

### Summary of invention

The invention solves the above problem by the arrangement defined in the subsequent claim 1 and the method of the subsequent claim 10. Convenient embodiments are defined in the depending claims.

### Brief description of drawings

Figure 1 shows a set of barges with cranes being towed to the building site,

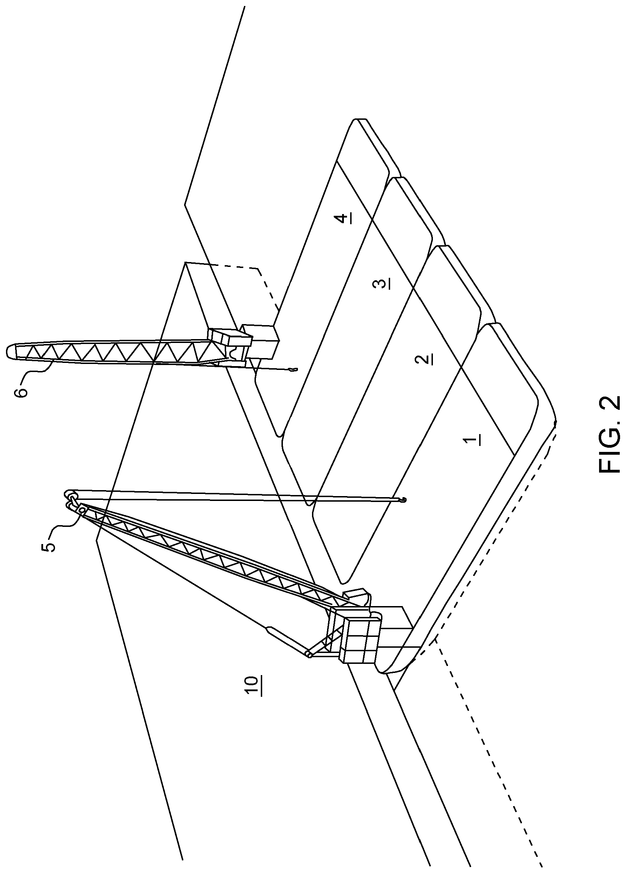

Figure 2 shows the set of barges assembled at the building site,
Figure 3 shows a structure being erected on the set of barges,
Figure 4 shows the finished structure on top of the set of barges,
Figure 5 shows the structure about to be launched from the set of barges,
Figure 6 shows the structure during launch,
Figure 7 shows the structure floating outside of the set of barges, and

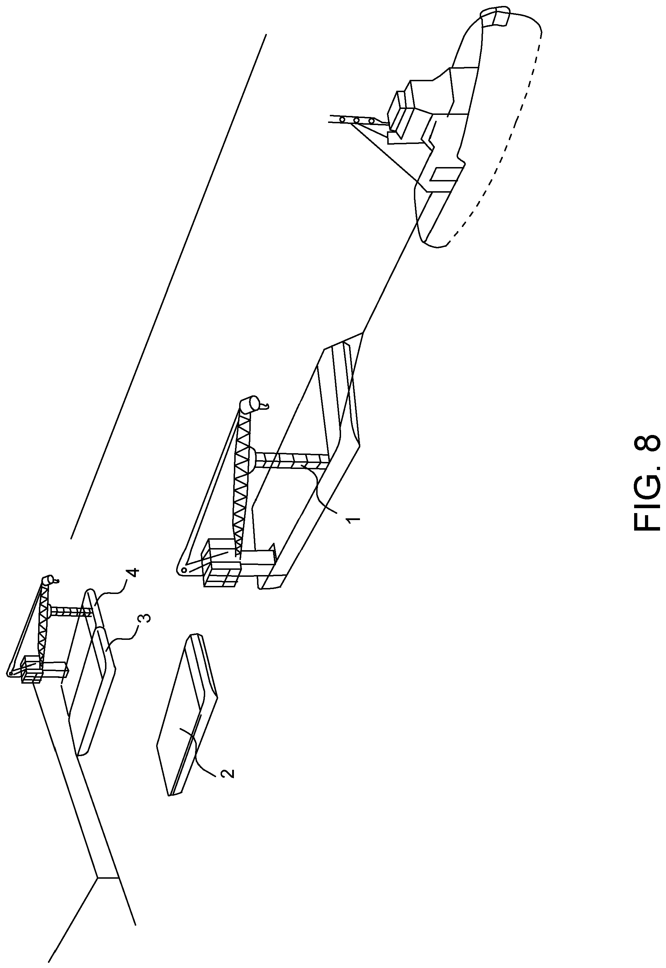

Figure 8 illustrates the disassembly and towing away of the set of barges.

### Detailed description of the invention

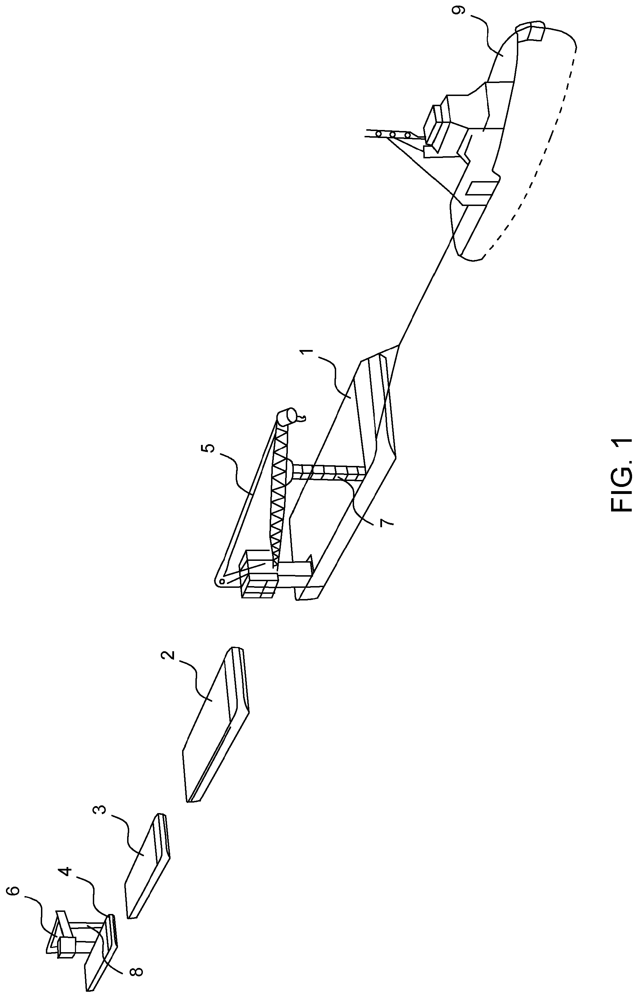

Figure 1 shows a set of barges 1 - 4 being towed to the construction site. The barges may be of a standard type or standard barges that are modified to be able to connect with each other. In the drawings are shown four barges, but depending on the size of deck area and the buoyancy required, the number of barges may be smaller or greater.

Two cranes 5, 6, which are attached on top of a respective barge 1, 4 are also present. During the tow, the boom of the cranes is resting in a respective boom rest 7, 8.

The barges can conveniently be towed by a single tow vessel 9 with tow lines extending between the barges 1-4. However, it would be safer to have at least two tow vessels, one at each end of the tow.

When the barges 1-4 have reached their destination, i.e. a quay 10, the barges are lined up side-by-side and moored with one short side of the barges 1-4 next to the quay side. Preferably, the barges 1-4 abut the quay 10. Fenders may be placed between the barges and the quay. The mooring may comprise hawsers extending between the barges and the quay.

Then the barges 1-4 are fixedly connected, such as by welding, to make up a single floating unit where the barges are unable to move or flex relative to each other. This process may also take place before the barges are moored.

Instead of welding, the barges may also be firmly connected by devices that are attached between the barges. The connection should be made in such a way that the decks of the barges 1-4 are flush and that there are no obstacles protruding above the surface of the decks.

The barges are arranged so that the two cranes 5, 6 are situated on a respective outer barge 1 and 4, and preferably close to the outer side of those barges as well as close to the inner end, i.e. the end next to the quay 10, of the barges 1, 4. For the building of smaller floating structures, one crane 5 may be sufficient.

Due to tidal differences, the deck of the barges 1-4, i.e. the floating unit will be at different altitudes relative to the quay 10. This can be at least partially compensated for by varying the ballast of the barges. Nevertheless, a ramp (not shown) may be arranged between the barges 1-4 and the quay 10. The ramp may be a small ramp solely for persons and small carry-on goods but may also be a larger ramp that can be crossed by vehicles.

The barges may also have moorings lines, such as ropes or chains, attached to their sides distal from the quay side at one end and attached to anchors at another end, such as suction anchors, placed at the seabed distant from the quay side.

With the barges 1-4 thus moored, the building of the sub-structure may commence. The elements from which the sub-structure is to be built are brought to the quay either by lorry or by boat. The elements are conveniently hoisted onto the deck of the barges 1-4 by the cranes 5, 6.

In an alternative embodiment, the floating unit may be purpose-built as a single or multi hull structure instead of assembling it from barges.

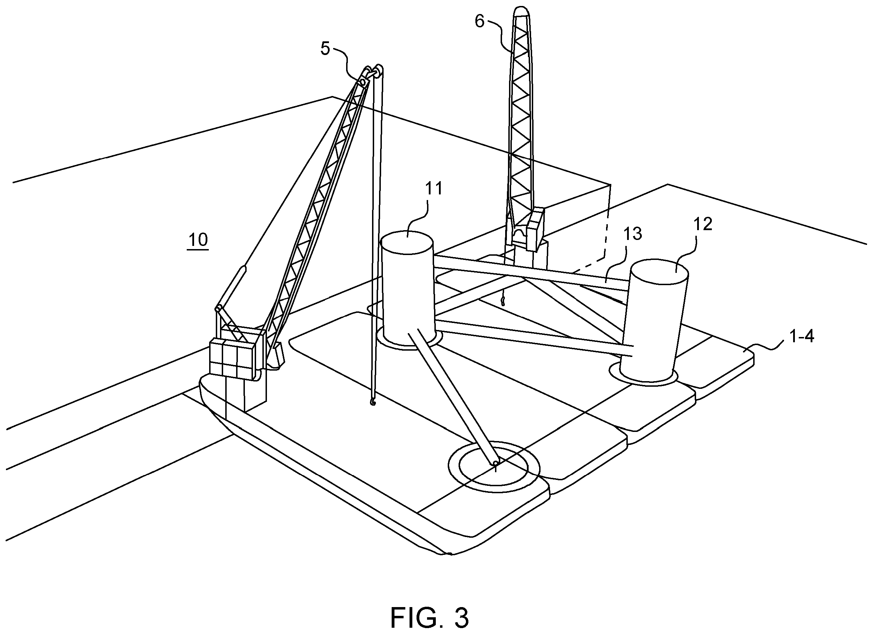

Figure 3 shows two columns 11, 12 of the sub-structure having been installed and interconnected by struts 13. The connections are conveniently made by welding the pipes of the struts together.

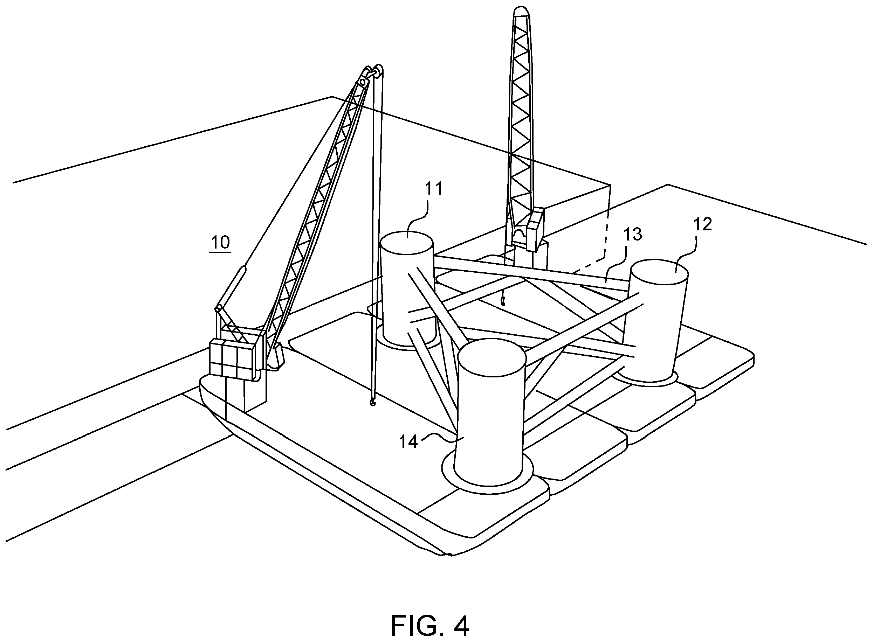

In figure 4 a third column 14 has been installed and connected to the two first columns 11, 12. The sub-structure 15 is now completed.

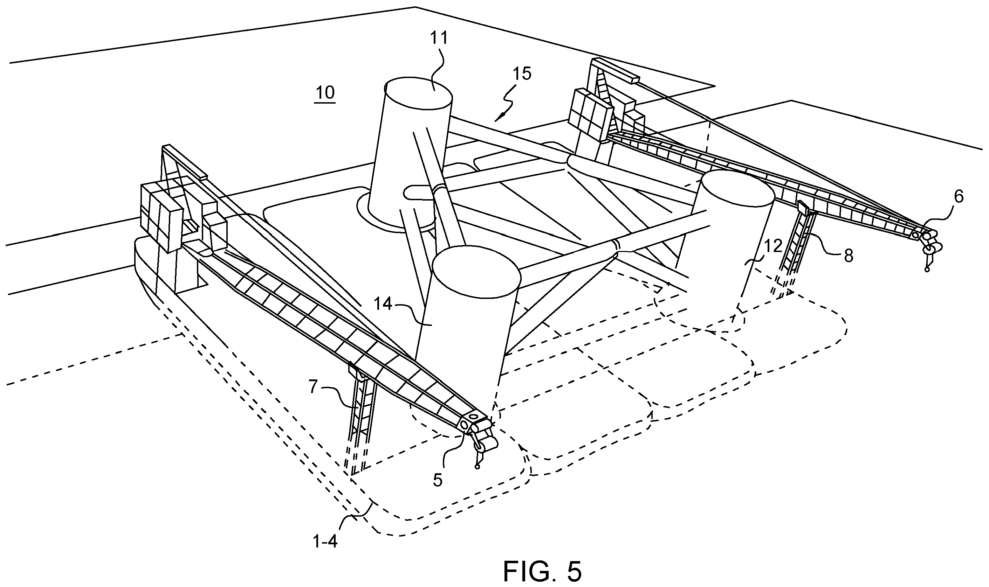

Figure 5 shows a first step of the launching process. The booms of the cranes 5, 6 have been lowered onto the boom rests 7, 8 and secured thereto. The barges are ballasted by letting water flow into ballast chambers at the distal end of the barges 1-4. This ballasting causes the distal ends of the barges 1-4 to sink into the water. The flow of water into the ballasting chambers continues until the two columns 12, 14 closest to the outer edge of the barges 1-4 are partially submerged under water, and preferably floats off from the deck of the barges 1-4.

When the barges 1-4 have reached a sufficient inclination for the sub-structure 15 to slide off the deck and into the water, any ties between the sub-structure and the barges 1-4 are released. A winch or similar may also be activated to pull the sub-structure along the deck if it will not slide due to gravity.

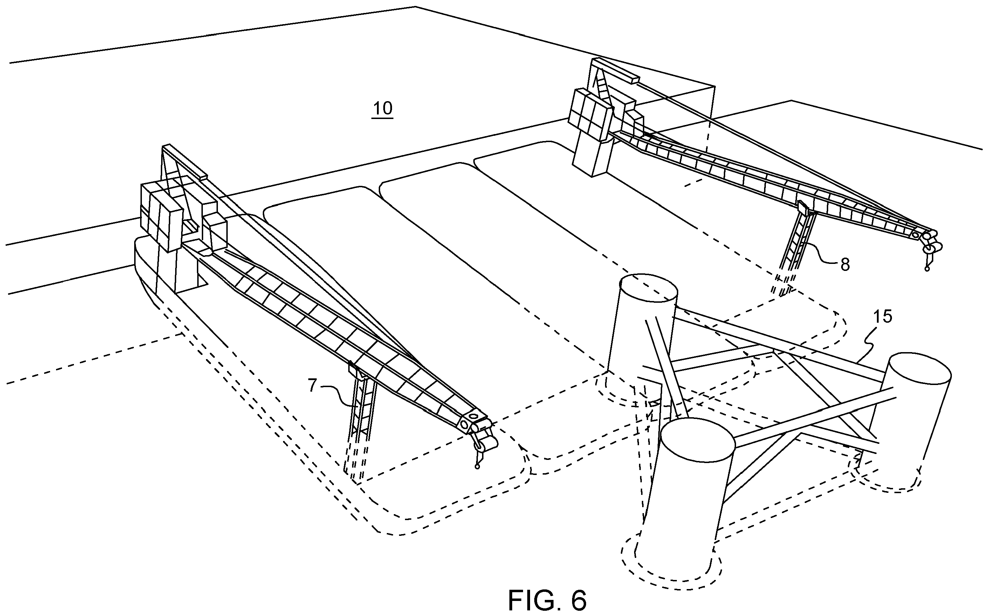

In figure 6 the sub-structure 15 has almost completely slid off the deck, and the innermost column 11 has started to float.

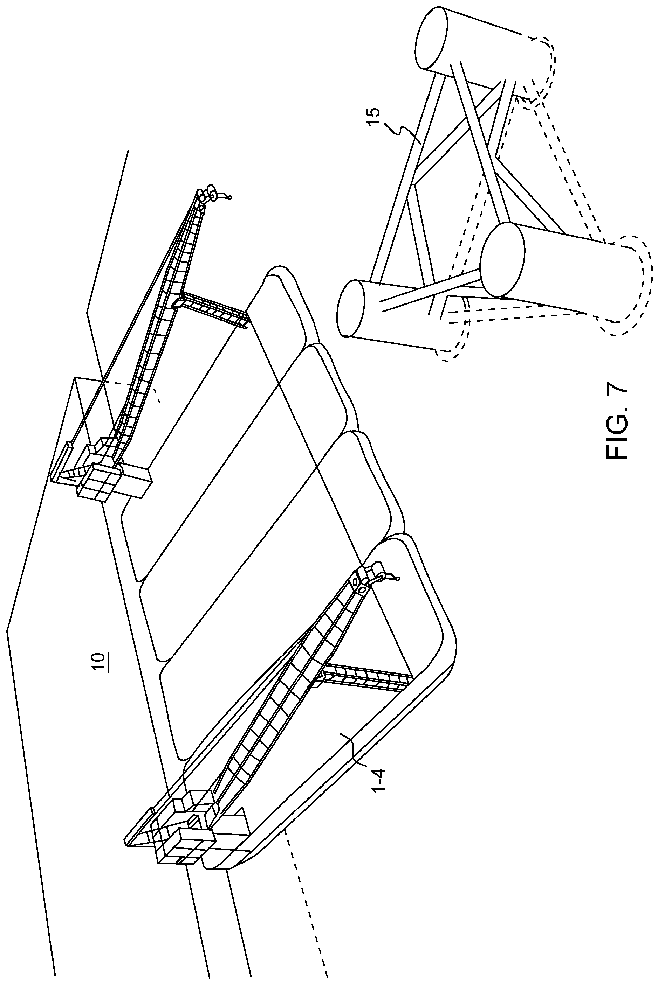

In figure 7 the sub-structure 15 is floating outside of the barges 1-4. At this distance from the quayside, the water depth is sufficient for the sub-structure 15 to float without touching the seabed. It can now be towed to a convenient nearby site for installation of the super-structure such as a wind turbine.

After the launch of the sub-structure 15, the barges 1-4 are de-ballasted by pumping the water in the ballasting chambers out, so that the barges 1-4 are brought up to float with the deck in a horizontal plane. Building of the next sub-structure can then be started.

When the planned number of sub-structures have been built and launched as described above, the barges 1-4 are disconnected from each other and towed away. Alternatively, the barges 1-4 may also be towed as one unit if the next use of the barges is as a single unit, such as at another location.

## Claims

1. A floating fabrication arrangement (1-4, 5, 6, 10) for building of floating structures (15), comprising a floating unit (1-4) having a continuous deck, at least one crane (5; 6), suitable to hoist elements of the floating structure from a quay to the continuous deck, attached to said floating unit (1-4) and a mooring arrangement capable of mooring the floating unit in a floating state on a body of water, the floating unit having ballast chambers capable of ballasting and de-ballasting the floating unit between a first building position where the floating unit floats with the deck above water in a substantially horizontal position and a second inclined launch position, in which a first part of the deck is submerged and a second part of the deck is above water, wherein said arrangement is adapted to be moored next to a quay-side (10), said first part of the deck is next to a distal side of the floating unit, facing away from said quay-side (10), and said second part of the deck is next to a proximal side of the floating unit, facing towards the quay-side, wherein when the floating unit has reached a sufficient inclination, the floating structure (15) slides off the continuous deck and into the body of water on the distal side of the floating unit.

2. The arrangement of claim 1, wherein the floating unit is assembled from a plurality of barges (1-4) that are firmly interconnected.

3. The arrangement according to claim 2, wherein the barges (1-4) are interconnected with their long sides facing each other.

4. The arrangement of any of the preceding claims, wherein it comprises two cranes (5, 6) arranged on the deck of the outermost barges (1, 4).

5. The arrangement according to claim 2 or 4, wherein the barges (1-4) are connected to each other by welding.

6. The arrangement according to claim 2 or 4, wherein the barges (1-4) are connected to each other by devices attached between the barges.

7. The arrangement of any of the claims 3-6, wherein it comprises a ramp extending between the quay (10) and the floating unit (1-4).

8. The arrangement of any of the claims 3-7, wherein said mooring comprises hawsers attaching the floating unit (1-4) to the quay (10).

9. The arrangement of claim 8, wherein the mooring also comprises mooring lines attached between said floating unit (1-4) and one or more anchors at the seabed.

10. A method of building a floating structure using the floating fabrication arrangement of any of the claims 1-9, **characterised in** the following steps:
a. mooring a proximal side of the floating unit (1-4) by hawsers to a quay (10) while said floating unit (1-4) is floating on a body of water,
b. while said continuous deck is in a horizontal building position, lifting said elements with the at least one crane (5; 6) of the floating unit (1-4) onto said deck and interconnecting said elements to erect said floating structure (15) on said deck,
c. ballasting said floating unit (1-4) into an inclined launch position, to bring a first part of said deck, next to a distal side of said floating unit (1-4), facing away from said quay (10), below the surface of the water,
d. sliding said completed floating structure (15) off of said floating unit (1-4) and into said water, and
e. de-ballasting said floating unit (1-4) to bring the deck completely out of the water;
f. said proximal side of said floating unit (1-4) being maintained in a moored state to the quay (10) during steps a-e.

11. The method of claim 10, further comprising firmly interconnecting a plurality of barges (1-4) to form a single floating unit having a continuous deck.

12. The method of claim 11, further comprising interconnecting said barges (1-4) with their long sides facing each other.

13. The method of claim 10, 11 or 12, further comprising bringing elements to build said floating structure (15) to said quay (10) prior to lifting said elements onto said deck.

14. The method of any of the claims 10-13, further comprising arranging a ramp between said quay (10) and said deck of said floating unit (1-4).

15. The method of any of the claims 10-14, further comprising attaching mooring lines between said floating unit (1-4) and one or more anchors at the seabed.

## Patentansprüche

1. Schwimmende Herstellungsanordnung (1-4, 5, 6, 10) zum Bauen von schwimmenden Strukturen (15), umfassend eine schwimmende Einheit (1-4), die ein durchgehendes Deck aufweist, mindestens einen Kran (5; 6), der geeignet ist, Elemente der schwimmenden Struktur von einem Kai zu dem durchgehenden Deck hochzuziehen, der an der schwimmenden Einheit (1-4) angebracht ist, und eine Festmachanordnung, die in der Lage ist, die schwimmende Einheit in einem schwimmenden Zustand auf einem Gewässer festzumachen, wobei die schwimmende Einheit Ballastkammern aufweist, die in der Lage sind, die schwimmende Einheit zwischen einer ersten Bauposition, in der die schwimmende Einheit mit dem Deck über Wasser in einer im Wesentlichen horizontalen Position schwimmt, und einer zweiten geneigten Startposition zu ballastieren und zu entballastieren, in der ein erster Teil des Decks untergetaucht ist und ein zweiter Teil des Decks über Wasser ist, wobei die Anordnung angepasst ist, um neben einer Kaiseite (10) festgemacht zu werden, der erste Teil des Decks neben einer distalen Seite der schwimmenden Einheit ist, die von der Kaiseite (10) abgewandt ist, und der zweite Teil des Decks neben einer proximalen Seite der schwimmenden Einheit ist, die der Kaiseite zugewandt ist, wobei, wenn die schwimmende Einheit eine ausreichende Neigung erreicht hat, die schwimmende Struktur (15) von dem durchgehenden Deck herab und in das Gewässer auf der distalen Seite der schwimmenden Einheit gleitet.

2. Anordnung nach Anspruch 1, wobei die schwimmende Einheit aus einer Vielzahl von Lastkähnen (1-4) zusammengesetzt ist, die fest miteinander verbunden sind.

3. Anordnung nach Anspruch 2, wobei die Lastkähne (1-4) mit ihren einander zugewandten Längsseiten miteinander verbunden sind.

4. Anordnung nach einem der vorstehenden Ansprüche, wobei sie zwei Kräne (5, 6) umfasst, die auf dem Deck der äußersten Lastkähne (1, 4) angeordnet sind.

5. Anordnung nach Anspruch 2 oder 4, wobei die Lastkähne (1-4) durch Schweißen miteinander verbunden sind.

6. Anordnung nach Anspruch 2 oder 4, wobei die Lastkähne (1-4) durch Vorrichtungen miteinander verbunden sind, die zwischen den Lastkähnen angebracht sind.

7. Anordnung nach einem der Ansprüche 3 bis 6, wobei sie eine Rampe umfasst, die sich zwischen dem Kai (10) und der schwimmenden Einheit (1-4) erstreckt.

8. Anordnung nach einem der Ansprüche 3 bis 7, wobei das Festmachen Trossen umfasst, die die schwimmende Einheit (1-4) an dem Kai (10) anbringen.

9. Anordnung nach Anspruch 8, wobei das Festmachen auch Festmacherleinen umfasst, die zwischen der schwimmenden Einheit (1-4) und einem oder mehreren Ankern an dem Meeresboden angebracht sind.

10. Verfahren zum Bauen einer schwimmenden Struktur unter Verwendung der schwimmenden Herstellungsanordnung nach einem der Ansprüche 1 bis 9, **gekennzeichnet durch** die folgenden Schritte:
a. Festmachen einer proximalen Seite der schwimmenden Einheit (1-4) durch Trossen an einem Kai (10), während die schwimmende Einheit (1-4) auf einem Gewässer schwimmt,
b. während sich das durchgehende Deck in einer horizontalen Bauposition befindet, Heben der Elemente mit dem mindestens einen Kran (5; 6) der schwimmenden Einheit (1-4) auf das Deck und Verbinden der Elemente miteinander, um die schwimmende Struktur (15) auf dem Deck aufzubauen,
c. Ballastieren der schwimmenden Einheit (1-4) in eine geneigte Startposition, um einen ersten Teil des Decks, neben einer distalen Seite der schwimmenden Einheit (1-4), die von dem Kai (10) abgewandt ist, unter die Oberfläche des Wassers zu bringen,
d. Gleiten der vervollständigten schwimmenden Struktur (15) von der schwimmenden Einheit (1-4) herab und in das Wasser, und
e. Entballastieren der schwimmenden Einheit (1-4), um das Deck vollständig aus dem Wasser zu bringen;
f. wobei die proximale Seite der schwimmenden Einheit (1-4) während der Schritte a-e in einem an dem Kai (10) festgemachten Zustand gehalten wird.

11. Verfahren nach Anspruch 10, ferner umfassend das feste Verbinden einer Vielzahl von Lastkähnen (1-4), um eine einzige schwimmende Einheit auszubilden, die ein durchgehendes Deck aufweist.

12. Verfahren nach Anspruch 11, ferner umfassend das Verbinden der Lastkähne (1-4) mit ihren einander zugewandten Längsseiten.

13. Verfahren nach Anspruch 10, 11 oder 12, ferner umfassend das Bringen von Elementen, um die schwimmende Struktur (15) zu bauen, zu dem Kai (10) vor dem Heben der Elemente auf das Deck.

14. Verfahren nach einem der Ansprüche 10 bis 13, ferner umfassend das Anordnen einer Rampe zwischen dem Kai (10) und dem Deck der schwimmenden Einheit (1-4).

15. Verfahren nach einem der Ansprüche 10-14, ferner umfassend das Anbringen von Festmacherleinen zwischen der schwimmenden Einheit (1-4) und einem oder mehreren Ankern an dem Meeresboden.

## Revendications

1. Agencement de fabrication flottant (1-4, 5, 6, 10) pour la construction de structures flottantes (15), comprenant une unité flottante (1-4) ayant un pont continu, au moins une grue (5 ; 6), apte à hisser des éléments de la structure flottante depuis un quai jusqu'au pont continu, fixée à ladite unité flottante (1-4) et un agencement d'amarrage capable d'amarrer l'unité flottante dans un état flottant sur une étendue d'eau, l'unité flottante ayant des chambres de ballast capables du ballastage et du déballastage de l'unité flottante entre une première position de construction dans laquelle l'unité flottante flotte avec le pont au-dessus de l'eau dans une position sensiblement horizontale et une seconde position de mise à l'eau inclinée, dans laquelle une première partie du pont est immergée et une seconde partie du pont est au-dessus de l'eau, dans lequel ledit agencement est adapté pour être amarré à côté d'un côté de quai (10), ladite première partie du pont est à côté d'un côté distal de l'unité flottante, orientée à l'opposé dudit côté de quai (10), et ladite seconde partie du pont est à côté d'un côté proximal de l'unité flottante, faisant face au côté de quai, dans lequel, lorsque l'unité flottante a atteint une inclinaison suffisante, la structure flottante (15) glisse hors du pont continu et dans l'étendue d'eau sur le côté distal de l'unité flottante.

2. Agencement selon la revendication 1, dans lequel l'unité flottante est assemblée à partir d'une pluralité de barges (1-4) qui sont fermement reliées entre elles.

3. Agencement selon la revendication 2, dans lequel les barges (1-4) sont reliées entre elles avec leurs côtés longs se faisant face.

4. Agencement selon l'une quelconque des revendications précédentes, dans lequel il comprend deux grues (5, 6) agencées sur le pont des barges les plus extérieures (1, 4).

5. Agencement selon la revendication 2 ou 4, dans lequel les barges (1-4) sont reliées les unes aux autres par soudage.

6. Agencement selon la revendication 2 ou 4, dans lequel les barges (1-4) sont reliées les unes aux autres par des dispositifs fixés entre les barges.

7. Agencement selon l'une quelconque des revendications 3 à 6, dans lequel il comprend une rampe s'étendant entre le quai (10) et l'unité flottante (1-4).

8. Agencement selon l'une quelconque des revendications 3 à 7, dans lequel ledit amarrage comprend des aussières fixant l'unité flottante (1-4) au quai (10).

9. Agencement selon la revendication 8, dans lequel l'amarrage comprend également des lignes d'amarrage fixées entre ladite unité flottante (1-4) et une ou plusieurs ancres au niveau du fond marin.

10. Procédé pour la construction d'une structure flottante à l'aide de l'agencement de fabrication flottant selon l'une quelconque des revendications 1 à 9, **caractérisé par** les étapes suivantes :
a. amarrage d'un côté proximal de l'unité flottante (1-4) par des aussières à un quai (10) alors que ladite unité flottante (1-4) flotte sur une étendue d'eau,
b. alors que ledit pont continu est dans une position de construction horizontale, levage desdits éléments avec l'au moins une grue (5 ; 6) de l'unité flottante (1-4) sur ledit pont et liaison desdits éléments entre eux pour ériger ladite structure flottante (15) sur ledit pont,
c. ballastage de ladite unité flottante (1-4) dans une position de mise à l'eau inclinée, pour amener une première partie dudit pont, à côté d'un côté distal de ladite unité flottante (1-4), orientée à l'opposé dudit quai (10), sous la surface de l'eau,
d. glissement de ladite structure flottante (15) achevée hors de ladite unité flottante (1-4) et dans ladite eau, et
e. déballastage de ladite unité flottante (1-4) pour sortir complètement le pont de l'eau ;
f. ledit côté proximal de ladite unité flottante (1-4) étant maintenu dans un état amarré au quai (10) pendant les étapes a à e.

11. Procédé selon la revendication 10, comprenant en outre la liaison de manière ferme d'une pluralité de barges (1-4) entre elles pour former une seule unité flottante ayant un pont continu.

12. Procédé selon la revendication 11, comprenant en outre la liaison desdites barges (1-4) entre elles avec leurs côtés longs se faisant face.

13. Procédé selon la revendication 10, 11 ou 12, comprenant en outre le fait d'amener des éléments pour construire ladite structure flottante (15) audit quai (10) avant le levage desdits éléments sur ledit pont.

14. Procédé selon l'une quelconque des revendications 10 à 13, comprenant en outre l'agencement d'une rampe entre ledit quai (10) et ledit pont de ladite unité flottante (1-4).

15. Procédé selon l'une quelconque des revendications 10 à 14, comprenant en outre la fixation de lignes d'amarrage entre ladite unité flottante (1-4) et une ou plusieurs ancres au niveau du fond marin.
